# EUROPEAN PATENT SPECIFICATION

(11) **EP 3 200 406 B1**
(45) Date of publication and mention of the grant of the patent: **10.10.2018**
(21) Application number: 14884862.5
(22) Date of filing: 12.11.2014
(51) Int. Cl.: H04L 12/751, H04L 12/715, H04L 12/721, H04L 12/46

(54) **ESADI PROTOCOL FAST CONVERGENCE METHOD AND DEVICE, AND STORAGE MEDIUM**
SCHNELLES KONVERGENZVERFAHREN FÜR ESADI-PROTOKOLL UND VORRICHTUNG SOWIE SPEICHERMEDIUM
PROCÉDÉ ET DISPOSITIF DE CONVERGENCE RAPIDE DE PROTOCOLE ESADI, ET SUPPORT D'INFORMATIONS

(30) Priority: 24.09.2014 CN 201410495453
(43) Date of publication of application: 02.08.2017
(73) Proprietor: ZTE Corporation, Shenzhen, Guangdong 518057 (CN)
(72) Inventor: WU, Qiang, Shenzhen Guangdong 518057 (CN)
(74) Representative: Brevalex
(86) International application number: PCT/CN2014/090874
(87) International publication number: WO 2015/131541

(56) References cited:
- CN-A- 102 638 389
- CN-A- 102 724 097
- CN-A- 103 973 471
- CN-A- 104 052 671
- US-A1- 2014 056 178
- ZHAI F HU R PERLMAN INTEL LABS D EASTLAKE 3RD HUAWEI O STOKES EXTREME NETWORKS H: "Transparent Interconnection of Lots of Links (TRILL): End Station Address Distribution Information (ESADI) Protocol; rfc7357.txt", TRANSPARENT INTERCONNECTION OF LOTS OF LINKS (TRILL): END STATION ADDRESS DISTRIBUTION INFORMATION (ESADI) PROTOCOL; RFC7357.TXT, INTERNET ENGINEERING TASK FORCE, IETF; STANDARD, INTERNET SOCIETY (ISOC) 4, RUE DES FALAISES CH- 1205 GENEVA, SWITZERLAN, 3 September 2014 (2014-09-03), pages 1-31, XP015104449, [retrieved on 2014-09-03]
- EASTLAKE. D. 3RD ET AL.: 'Transparent Interconnection of Lots of Links (TRILL): Adjacency' RFC 7177 31 May 2014, pages 1 - 35, XP015100651
- PERLMAN, R. ET AL.: 'Routing Bridges (RBridges): Base Protocol Specification' RFC 6325 31 July 2011, pages 1 - 99, XP015076094

## Description

### TECHNICAL FIELD

The present disclosure generally relates to routing transmission techniques in the field of communications, and more particularly to a fast convergence method, apparatus, and storage medium of an End Station Address Distribution Information (ESADI) protocol.

### BACKGROUND

A Transparent Interconnection over Lots of Links (TRILL) protocol is already an international standard protocol. According to the TRILL protocol, layer 3 routing techniques are applied to layer 2 transmission to achieve a large-scale layer 2 cloud. Therefore, an excellent and effective layer 2 broadcast domain may be constructed so as to meet increasing requirements for converged networks or super data centres. The TRILL protocol uses an ESADI protocol as an optional protocol for implementing study of an Media Access Control (MAC) address corresponding to an end address.

The ESADI protocol is an end address study protocol evolved from an Intermediate System to Intermediate System (ISIS) protocol. According to the ESADI protocol, an ESADI neighbour is established by interaction and negotiation of Link-State Packets (LSP) of the TRILL protocol. Each Routing Bridge (RB) running the ESADI protocol generates an LSP of the ESADI protocol. The LSP carries an MAC address corresponding to an end address which is reachable by the RB, and transmits an MAC address of the RB to the network. During the transmission, an RB which takes a current RB as its neighbour saves the LSP messages of the ESADI protocol of the current RB to form a Link State Data Base (LSDB). Therefore, the current RB may study an end address of the ESADI neighbour through the LSDB.

The current ESADI protocol just proposes that, establishment of a Virtual Local Area Network (VLAN) or neighbour deletion are indicated by an ESADI protocol enabled label carried in a sub Type-length-value (TLV) of Interested VLANs and Spanning Tree Roots in the LSP in the TRILL protocol.

However, following problems may arise in practice. The current ESADI protocol requires that, an operation of keeping a Directive Routing Bridge (DRB) alive is performed through a Complete Sequence Numbers Protocol Data Unit (CSNP) message of the ESADI protocol so as to judge the DRB. Here, keeping the DRB alive means that, when an ESADI-CSNP message transmitted by the DRB is received within an RB aging time (the RB aging time is a transmission period, i.e., 30s, of three ESADI-CSNPs by default; DRB transmits one ESADI-CSNP in 10s by default), it is judged that the DRB is valid; when the ESADI-CSNP message is not received within the RB aging time due to network topology breaking, an RB being added or deleted or the like, the RB assumes the DRB to be invalid.

A delay of re-establishing the network topology by the ESADI protocol due to the DRB being invalid, may be up to 1200 seconds (an effective time for reserving the information of an invalid ESADI neighbour), such that the ESADI protocol cannot converge in time. During this period, the network topology has been changed actually, and the LSP of the TRILL protocol still exists in the RB. That is, the RB still preserves an unreachable invalid MAC table term, and the neighbouring RB of the RB is not deleted in time. Then, the DRB of the ESADI transmits the LSP according to the original network topology, which may cause an error in transmission of the LSP. The error further causes the ESADI protocol to fail to select a new DRB in time, and thus correct synchronization of an LSP in the newly split network cannot be guaranteed.

The document RFC7357 and entitled "Transparent Interconnection of Lots of Links (TRILL): End Station Address Distribution Information (ESADI) Protocol", H. ZHAI, F. HU, R. PERLMAN, D. EASTLAKE 3RD, O. STOKES, INTERNET ENGINEERING TASK FORCE, IETF STANDARD, INTERNET SOCIETY (ISOC) 4, RUE DES FALAISES CH-1205 GENEVA, SWITZERLAND, 3 September 2014, pages 1-31, provides the following disclosure. This document updates [RFC6325], the TRILL base protocol specification, replacing the description of the TRILL ESADI protocol, providing more detail on ESADI, updating other ESADI-related sections of [RFC6325], and prevailing over [RFC6325] in any case where they conflict. For this reason, familiarity with [RFC6325] is particularly assumed. These changes include a change to the format of ESADI-LSPs (ESADI Link State Protocol Data Units) that is not backwards compatible; this change is justified by the substantially increased amount of information that can be carried and in light of the very limited, if any, deployment of RFC 6325 ESADI.

### SUMMARY

In view of this, it is desired to provide a fast convergence method, apparatus, and storage medium of an End Station Address Distribution Information (ESADI) protocol in embodiments of the disclosure, so as to at least solve a defect of the current ESADI protocol being unable to converge in time.

The present invention is defined in the appended independent claims to which reference should be made. Advantageous features are set out in the appended dependent claims.

### BRIEF DESCRIPTION OF THE DRAWINGS

Fig. 1 is a schematic flowchart for implementing a convergence method of an ESADI protocol according to a first embodiment of the present disclosure;
Fig. 2 is a block diagram of a convergence apparatus of the ESADI protocol according to a second embodiment of the disclosure;
Fig. 3 is a block diagram of an ESADI protocol convergence unit according to a third embodiment of the disclosure;
Fig. 4 is a schematic flowchart of the third embodiment of the disclosure;
Fig. 5 is a schematic diagram of a format of a sub TLV of a current ESADI parameter in the third embodiment of the disclosure;
Fig. 6 is a schematic diagram of a format of a sub TLV of a modified ESADI parameter according to the third embodiment of the disclosure;
Fig. 7 is a diagram of a normal network topology according to the third embodiment of the disclosure; and
Fig. 8 is a diagram of an interrupted network topology according to the third embodiment of the disclosure.

### DEATIALED DESCRIPTION

The technical solutions of the present disclosure will be further described in detail, in conjunction with the appended drawings and embodiments.

### First embodiment

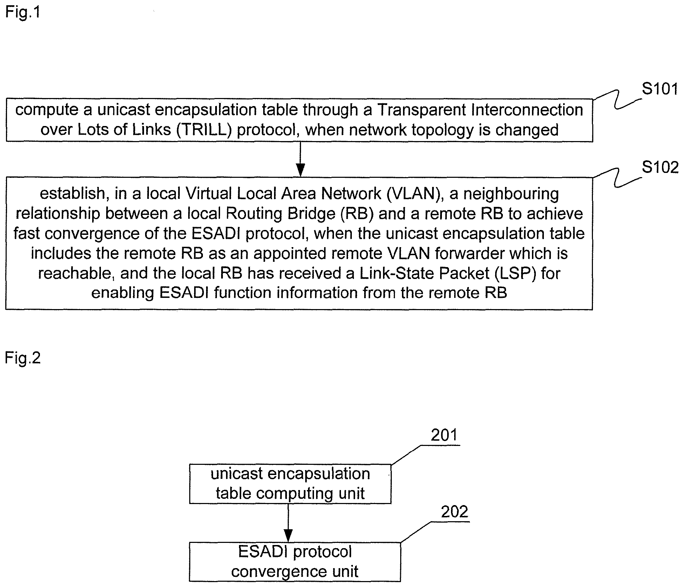

In order to solve a defect of the current ESADI protocol being unable to converge in time, the embodiment of the disclosure provides a convergence method of the ESADI protocol. The method is applicable to an RB of which a neighbouring relationship may be changed due to a change in network topology. As shown in Fig. 1, the method includes the following steps.

In step S101, a unicast encapsulation table is computed through an TRILL protocol, when the network topology is changed.

When a network topology is interrupted, an RB is added or is deleted or the like, the unicast encapsulation table is computed through the TRILL protocol, so as to determine reachability of all RBs as appointed remote VLAN forwarders.

In step S102, when the unicast encapsulation table includes a remote RB as an appointed remote VLAN forwarder which is reachable, and the local RB has received an LSP for enabling ESADI function information from the remote RB, a neighbouring relationship between the local RB and the remote RB is established in a local VLAN to achieve fast convergence of the ESADI protocol.

According to the fast convergence method of the ESADI protocol, when the network topology is changed, a unicast encapsulation table is computed through the TRILL protocol. When the unicast encapsulation table includes the remote RB as the appointed remote VLAN forwarder which is reachable, and the local RB has received the LSP for enabling ESADI function from the remote RB, the neighbouring relationship between the local RB and the remote RB is established in the local VLAN to achieve fast convergence of the ESADI protocol, so as to update the network topology in time.

Specially, step S102 of establishing, in a local Virtual Local Area Network (VLAN), a neighbouring relationship between a local Routing Bridge (RB) and a remote RB to achieve fast convergence of the ESADI protocol, when the unicast encapsulation table includes the remote RB as an appointed remote VLAN forwarder is reachable, and the local RB has received a Link-State Packet (LSP) for enabling ESADI function information from the remote RB, may include the following steps.

In step S1021, when an encapsulation table term of the remote VLAN of the remote RB exists in the local RB, the remote RB as the appointed remote VLAN forwarder is reachable.

In step S1022, the local RB receives the LSP from the remote RB. The LSP carries a sub TLV of Interested VLANs and Spanning Tree Roots, and fields of 'nickname' and 'VLAN' in the sub TLV of the Interested VLANs and Spanning Tree Roots indicate that the remote VLAN of the remote RB enables the ESADI function information.

In step S1023, after the local RB receives the LSP from the remote RB, the local VLAN of the local RB may wait for the remote RB to complete computation of the unicast encapsulation table, instead of adding the remote RB to be an ESADI neighbouring RB immediately. When the unicast encapsulation table includes the encapsulation table term of the remote VLAN of the remote RB, the local VLAN adds the remote RB to be the ESADI neighbouring RB and issues a MAC table term indicating the remote RB is reachable. Otherwise, the local VLAN does not add the remote RB to be an ESADI neighbouring RB or issue an MAC table term indicating the remote RB is reachable.

In step S1024, when the fields of 'nickname' and 'VLAN' in the sub TLV of the Interested VLANs and Spanning Tree Roots carried by the LSP of the TRILL protocol indicate that the remote VLAN enabled ESADI function information exists, in case that the remote RB as the appointed remote VLAN forwarder is still reachable no processing is performed; and in case that the remote RB as the appointed remote VLAN forwarder is not reachable, the remote RB as the ESADI neighbouring RB is deleted from the local VLAN, and the reachable MAC table term corresponding to the remote RB is deleted.

In step S1025, when the local RB founds that the remote VLAN enabled ESADI function information indicated in the fields of 'nickname' and 'VLAN' in the sub TLV of the Interested VLANs and Spanning Tree Roots of the LSP of the TRILL protocol is withdrawn, aged or deleted, the local RB deletes the remote RB as the ESADI neighbouring RB.

### Second embodiment

The second embodiment and the first embodiment are based on a same inventive concept. The second embodiment provides a convergence apparatus of the ESADI protocol. As shown in Fig. 2, the apparatus includes a unicast encapsulation table computing unit 201 and an ESADI protocol convergence unit 202.

The unicast encapsulation table computing unit 201 is arranged to compute the unicast encapsulation table through the TRILL protocol, when the network topology is changed.

The ESADI protocol convergence unit 202 is arranged to establish, in a local Virtual Local Area Network (VLAN), a neighbouring relationship between a local Routing Bridge (RB) and a remote RB to achieve fast convergence of the ESADI protocol, when the unicast encapsulation table includes the remote RB as an appointed remote VLAN forwarder which is reachable, and the local RB has received a Link-State Packet (LSP) for enabling ESADI function information from the remote RB.

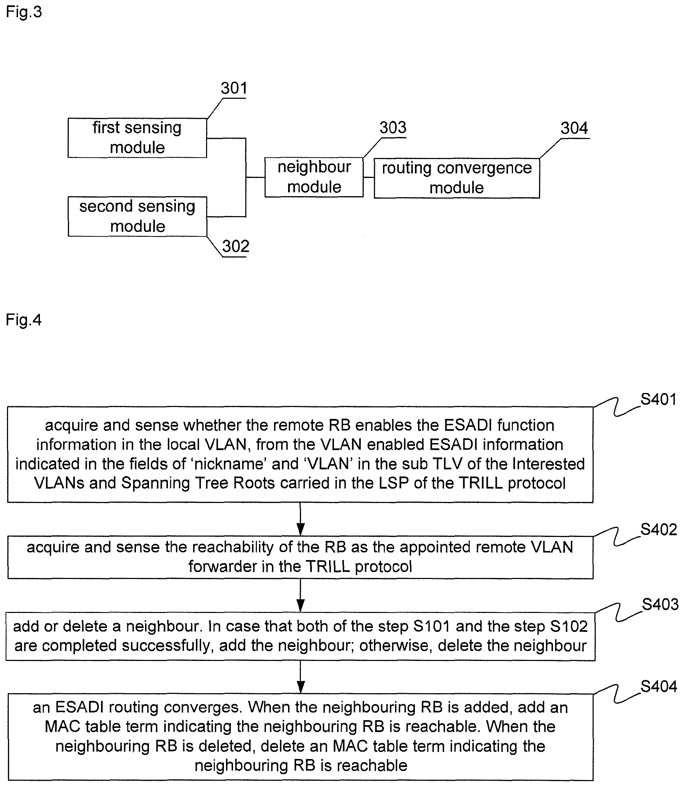

Specially, as shown in Fig. 3, the ESADI protocol convergence unit 202 may include a first sensing module 2021, a second sensing module 2022, a neighbour module 2023, and a routing convergence module 2024.

The first sensing module 2021 is a sensing module for sensing the reachability of the remote appointed forwarder, and is arranged to acquire and sense the reachability of the remote RB as the appointed remote VLAN forwarder in the TRILL protocol. The first sensing module 2021 may include a first sensing device. The first sensing device is arranged to sense that the remote RB as the appointed remote VLAN forwarder is reachable, when an encapsulation table term of the remote VLAN of the remote RB exists in the local RB.

The second sensing module 2022 is arranged to acquire and sense whether the remote RB enables the ESADI function information in the VLAN. The ESADI function information is acquired from the VLAN indicated in the fields of 'nickname' and 'VLAN' in the sub TLV of the Interested VLANs and Spanning Tree Roots carried in the LSP of the TRILL protocol from the remote RB. The second sensing module 2022 includes a second sensing device arranged to sense that the local RB receives the LSP from the remote RB. The LSP carries the sub Type-length-value (TLV) of Interested VLANs and Spanning Tree Roots, and fields of 'nickname' and 'VLAN' in the sub TLV of the Interested VLANs and Spanning Tree Roots indicate that the remote VLAN of the remote RB enables the ESADI function information.

The neighbour module 2023 is arranged to obtain two conditions for establishing an ESADI neighbouring relationship from the first sensing module and the second sensing module respectively, and decide to establish or delete the neighbouring relationship. The neighbour module 2023 includes a neighbour device. The neighbour device is arranged to perform the following steps. When fields of 'nickname' and 'VLAN' in the sub TLV of the Interested VLANs and Spanning Tree Roots carried in the LSP received, by the local RB, from the remote RB indicate that the remote VLAN of the remote RB enables the ESADI function information, the neighbour device waits for the remote RB to complete computation of the unicast encapsulation table, instead of adding the remote RB to be an ESADI neighbouring RB immediately. When the unicast encapsulation table includes the encapsulation table term of the remote VLAN of the remote RB, the local VLAN adds the remote RB to be the ESADI neighbouring RB and issues a MAC table term indicating the remote RB is reachable. Otherwise, the local VLAN does not add the remote RB to be an ESADI neighbouring RB or issue an MAC table term indicating the remote RB is reachable.

The routing convergence module 2024 is arranged to add or delete the MAC table term indicating the remote RB is reachable corresponding to a neighbouring relationship through establishing or deleting the neighbouring relationship in the neighbour module, so as to achieve fast convergence of the ESADI protocol. The routing convergence module 2024 may include a first routing convergence device and a second routing convergence device.

The first routing convergence device is arranged to, when the fields of 'nickname' and 'VLAN' in the sub TLV of the Interested VLANs and Spanning Tree Roots carried by the LSP in the TRILL protocol indicate that the remote VLAN enabled ESADI function information exists, perform no processing in case that the remote RB as the appointed remote VLAN forwarder is still reachable, and delete the remote RB as the ESADI neighbouring RB from the local VLAN and delete the reachable MAC table term corresponding to the remote RB in case that the remote RB as the appointed remote VLAN forwarder is not reachable.

The second routing convergence device is arranged to delete, by the local RB, the remote RB as the ESADI neighbouring RB, when the local RB founds that the remote VLAN enabled ESADI function information indicated in the fields of 'nickname' and 'VLAN' in the sub TLV of the Interested VLANs and Spanning Tree Roots of the LSP of the TRILL protocol is withdrawn, aged or deleted.

### Third embodiment

According to the third embodiment, the unicast encapsulation table is computed based on the appointed remote forwarder indicated in the fields of 'nickname' and 'VLAN' in the sub TLV of the Interested VLANs and Spanning Tree Roots carried by the LSP in the TRILL protocol, and the neighbouring relationship is maintained based on dynamic reachability of unicast encapsulation information included in the unicast encapsulation table. Therefore, an ESADI neighbour may be established or deleted rapidly in response to a change in the network topology, an invalidity of an DRB may be detected rapidly, a unified and new DRB may be selected and LSP synchronization of ESADI may be accelerated, so as to improve the convergence performance of the ESADI protocol.

As shown in Fig. 4, the flowchart of the embodiment includes the following steps.

In Step S401, whether the remote RB enables the ESADI function information in the VLAN is acquired and sensed, from the remote VLAN enabled ESADI information indicated in the fields of 'nickname' and 'VLAN' in the sub TLV of the Interested VLANs and Spanning Tree Roots carried in the LSP of the TRILL protocol.

In step S402, the reachability of the RB as the appointed remote VLAN forwarder in the TRILL protocol is acquired and sensed.

In step S403, a neighbour is added or deleted. In case that both step S101 and step S102 are completed successfully, the neighbour is added; otherwise, the neighbour is deleted.

In step S404, an ESADI routing converges. When the neighbouring RB is added, an MAC table term indicating the neighbouring RB is reachable is added. When the neighbouring RB is deleted, an MAC table term indicating the neighbouring RB is reachable is deleted.

Here, The ESADI protocol is mainly responsible for studying a reachable MAC address of the remote RB to form an TRILL MAC table in the local RB, after establishing a ESADI neighbouring relationship between the local RB and remote RB. The TRILL MAC table is used to judge which remote RB an Ethernet frame can be unicasted to, based on MAC and VLAN information of the Ethernet frame.

Conventionally, the unicast encapsulation table is used to encapsulate a normal Ethernet frame into an unicast TRILL data message and provides information required for head information for encapsulating the TRILL message. Specially, when an Ethernet frame is received, the TRILL MAC table of the local RB formed by the ESADI protocol is searched for based on the MAC and VLAN information of the Ethernet frame. When the Ethernet frame is to be unicasted to a certain remote RB, the Ethernet frame is encapsulated into an TRILL data message through head information for encapsulating the TRILL message based on the unicast encapsulation table, and the TRILL data message is transmitted to the remote RB finally.

Here, unicast encapsulation table computation includes TRILL network unicast topology computation, and unicast encapsulation table filling.

### 1) TRILL network unicast topology computation

An SPF algorithm is performed by taking the local RB as a root. The SPF algorithm assumes each router to be a root and computes a distance between the router and each remote RB. Each RB may compute a topology graph of a routing domain based on a unified data base. The topology graph is similar to a tree called a shortest path tree, i.e., an STP tree. When it is found that a remote RB exists in the STP tree, topology reachability from the local RB to the remote RB is asserted.

### 2) Unicast encapsulation table filling

In case that the remote RB is reachable topologically, a unicast encapsulation table of a corresponding VLAN is filled in, based on the appointed remote VLAN forwarder notified by the remote RB in the sub TLV of the Interested VLANs and Spanning Tree Roots.

The ESADI protocol serves for unicasting in the TRILL network. A data message is unicasted in the TRILL network based on the unicast encapsulation table. The fact that the unicast encapsulation table of the VLAN is not formed, means there is no remote RB as a receiver of the VLAN. Therefore, the ESADI neighbouring RB should be formed under the condition that the unicast encapsulation table of the VLAN is formed, i.e., the TRILL network has unicast reachability to the remote RB. In contrast, in a case that the unicast encapsulation table of the VLAN is not formed while the ESADI neighbouring RB of the VLAN is created, study of MAC reachability information of the ESADI becomes useless.

In practice, the third embodiment may include the following aspects.

### I Modification of the ESADI protocol

### 1. Modification of DRB failure process

According to the original protocol, it is proposed that an DRB is kept alive based on an CSNP message of the ESADI. When a RB receives an ESADI-CSNP message from the DRB within one RB aging time period, the DRB is assumed to be valid and the aging time period is refreshed to be 30 seconds. When the RB fails to receive the ESADI-CSNP message from the DRB within the RB aging time period, the DRB is assumed to be invalid, and the RB may transmit, as a proxy of the DRB function, the CSNP message.

The embodiment eliminates the above process. According to the processing method provided by the embodiment, a change in the network topology may be responded rapidly and the failure of the DRB may be detected rapidly. Then, a new DRB is selected from valid neighbouring RBs and implements the DRB function to transmit the CSNP message.

### 2. Modification of the sub TLV of a ESADI parameter

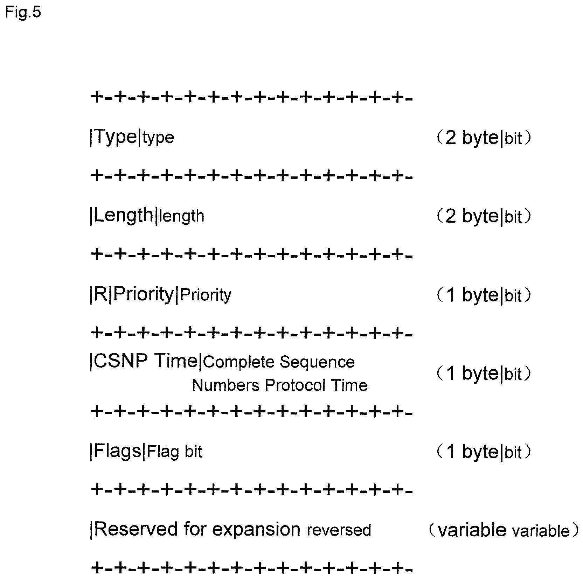

As shown in Fig. 5, a sub TLV of a current ESADI parameter includes: a DRB selection priority level, a CSNP timeout period, a flag bit (currently, the flag bit merely includes a bit indicating whether unicast is supported), an extension field and the like.

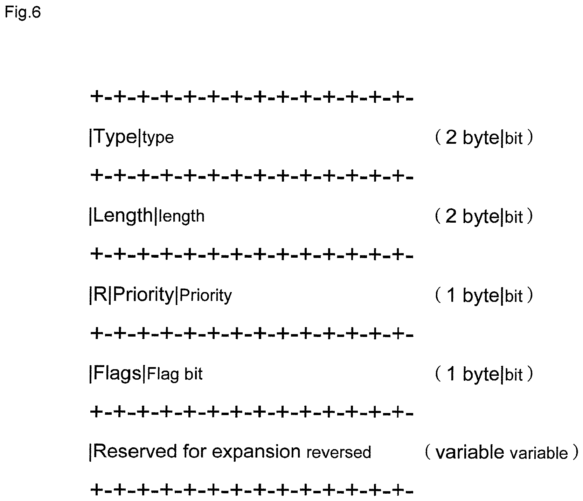

As shown in Fig. 6, a field of 'CSNP Time' corresponding to the CSNP timeout period in the sub TLV of the ESADI parameter required in the protocol (or draft) is deleted, and the modified sub TLV includes the DRB selection priority, a flag bit (currently, the flag bit includes a bit indicating whether unicast is supported), and an extension field.

### 2) Processing method

1. When the local RB has received the appointed remote forwarder indicated in the fields of 'nickname' and 'VLAN' in the sub TLV of the Interested VLANs and Spanning Tree Roots carried in the TRILL-LSP message from the remote RB, the local RB may perform computation of the unicast encapsulation table on the sub TLV of the remote RB, instead of immediately adding the VLAN of the remote RB to make the remote RB to be a ESADI neighbouring RB. When the remote RB as the appointed remote VLAN forwarder is reachable, that is, there is an encapsulation table term of the VLAN of the remote RB, the remote RB is added to be an ESADI neighbouring RB and a MAC table term indicating the remote RB is reachable is issued. Otherwise, the remote RB will not be added to be an ESADI neighbouring RB and a MAC table term indicating the remote RB is reachable will not be issued.
2. In case that there is the appointed remote forwarder indicated in the fields of 'nickname' and 'VLAN' in the sub TLV of the Interested VLANs and Spanning Tree Roots carried in the TRILL-LSP message, when the TRILL protocol founds that the network topology is changed, the computation of the unicast encapsulation table is performed on the sub TLV. In case that the remote RB as the appointed VLAN forwarder is still reachable, no processing is performed. Otherwise, the ESADI neighbouring RB is deleted and the MAC table term indicating the remote RB is reachable is deleted.
3. When the appointed remote forwarder information indicated in the fields of 'nickname' and 'VLAN' in the sub TLV of the Interested VLANs and Spanning Tree Roots carried in the TRILL-LSP message from the remote RB is deleted, withdrawn or aging, the remote RB as the neighbouring RB is deleted.
4. The ESADI neighbouring RB may added or deleted directly through the methods of the above '1', '2', and '3'. In this case, DRB selection in the ESADI protocol may be triggered immediately. The selection is performed among current ESADI neighbouring RBs. Therefore, a new DRB may replace an old DRB immediately, to transmit the CSNP message periodically. In this way, the failure of the DRB may be responded more rapidly, and the synchronization of the LSP data base may be accelerated after the DRB fails, so as to improve convergence performance of the network.

In order to make the object, technical methods and advantages of the disclosure to be clearer, the method of the disclosure will be described in detail, and the disclosure will be described in detail in conjunction with the appended drawings.

### First sub-instance

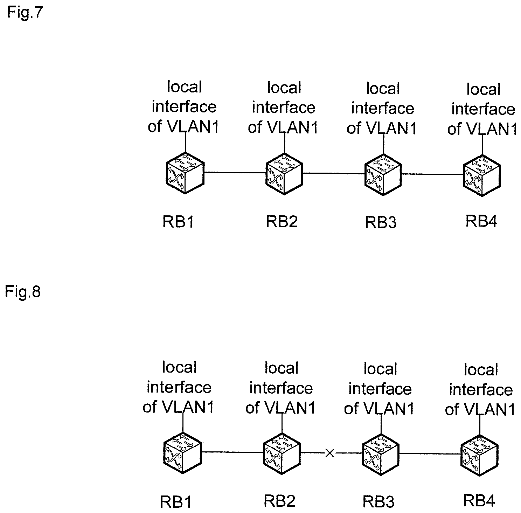

As shown in Fig. 7, an RB1, an RB2, an RB3 and an RB4 form a linear network topology. Each of the RB1, the RB2, the RB3 and the RB4 is a boundary RB of an TRILL network. Each RB has a physical interface which is within a VLAN1 and connected to a local host. Therefore, each RB becomes an appointed VLAN1 forwarder, and enables the ESADI protocol. Priority levels of the RB1, the RB2, the RB3 and the RB4 are 126, 64, 64 and 127 respectively.

It is assumed that only the RB1, the RB2 and the RB3 exist in the original network topology, and each of them establishes an ESADI neighbour within the VLAN1. At this time, the RB4 accesses the TRILL network newly. Since the RB4 has a local interface for accessing the VLAN1, the RB4 becomes one appointed VLAN1 forwarder with this interface and enables the ESADI protocol. Then, the RB4 issues, by the LSP of the TRILL protocol, that the RB4 supports the ESADI protocol in the VLAN1. That is, the RB4 fills a sub TLV of the Interested VLANs and Spanning Tree Roots into the LSP of the TRILL protocol, so as to notify the VLAN1 that it supports the ESADI protocol and the RB4 is an appointed VLAN1 forwarder.

After flooding of the LSP by the RB4, the RB1, the RB2 and the RB3 may receive the LSP of the TRILL protocol generated in the RB4. Meanwhile, the RB4 may receive LSPs of the TRILL protocols generated by the RB1, the RB2 and the RB3 respectively, so as to reach a synchronization state of the LSPs.

When the RB1 receives the LSP from the RB4, the RB1 may extract the 'nickname' and 'VLAN' of the RB4 from the sub TLV of the Interested VLANs and Spanning Tree Roots carried in the LSP of the RB4, to compute the unicast encapsulation table. It is found that the 'nickname' and 'VLAN1' of the RB4 is reachable, that is, there is an encapsulation table term of the VLAN of the RB4, and thus the RB4 is added to be an ESADI neighbour in an ESADI neighbour list.

The addition of the new neighbour triggers the selection of DRB of the ESADI. At this time, the RB1, the RB2 and the RB3 have not received the ESADI-LSP from the RB4 yet. The RB1, the RB2 and the RB3 assume the DRB selection priority level of the RB4 to be 64 by default. Assuming that the RB1 has the highest priority level of 126, the RB1 is assumed to be the DRB and transmit the ESADI-CSNP periodically. It should be noted that, since flooding path of the ESADI-LSP generated by the RB4 is RB3-RB2-RB1, a neighbouring relationship will be established between the RB3 and the RB4 firstly, and thereafter, a neighbouring relationship will be established between the RB2 and the RB4. After the neighbouring relationship is established between the RB3 and the RB4 firstly, the RB3 may receive the ESADI-LSP from the RB4 firstly, and find the DRB selection priority level of the RB4 is 127. Therefore, the RB4 is selected to be the DRB of the ESADI. At this time, there is inconsistence with respect to the LSP on the network topology. That is, the RB1 and the RB2 assume the DRB to be RB1 and the RB3 and RB4 assume the DRB to be RB4. However, this will not affect the synchronization of the ESADI-LSP. The ESADI protocol requires that an ESADI-CNSP should be normally processed even if the ESADI-CNSP is not generated from the DRB, so as to facilitate the synchronization of the ESADI-LSP. Finally, each of the RB1, the RB2 and the RB3 will receive the ESADI-LSP generated from the RB4.

### Second sub-instance

As shown in Fig. 8, the RB1, the RB2, the RB3 and the RB4 form a linear network topology. Each of the RB1, the RB2, the RB3 and the RB4 is an edge RB, and has a physical interface which is within the VLAN1 and connected to a local host. Therefore, each RB becomes an appointed VLAN1 forwarder and enables the ESADI protocol. The priority levels of the RB1, the RB2, the RB3 and the RB4 are 126, 64, 64 and 127 respectively. It is assumed that a link between the RB2 and the RB3 is interrupted. The second sub-instance will be described by taking the RB1 and RB4 as description objects.

In case that the link between the RB2 and the RB3 is interrupted, the RB1 may find this fault occurs through the LSP of the TRILL protocol. Thereby, an unicast topology from the RB1 to the RB4 is interrupted. By means of the computation of the unicast encapsulation table, it is found that the 'nickname' and 'VLAN1' of the RB4 are not reachable any longer. That is, the RB4 as appointed VLAN1 forwarder is unicast unreachable. Although the TRILL-LSP of the RB4 still exists in the RB1, which indicates that the RB4 enables the ESADI in the VLAN1, the ESADI neighbouring relationship between the RB1 and the RB4 may be deleted immediately in the RB1, without the need of deleting the neighbouring relationship after the aging time period (1200 seconds) of the TRILL-LSP of the RB4.

Since the RB4 as an ESADI neighbour is deleted from the RB1, the DRB selection is triggered. At this time, the RB1 has only one ESADI neighbour, i.e., the RB2, and the DRB will be selected from the RB2 and the RB1. At this time, the RB1 has a higher priority level, and thus will be selected to be the DRB of the ESADI and transmit the ESADI-CSNP periodically.

Meanwhile, Since the RB4 as the ESADI neighbour is deleted from the RB1, the reachable MAC address of the RB4 as the ESADI neighbour in the RB1 may be deleted immediately, and the RB1 does not have an invalid MAC address no longer. Therefore, the problem that a local message in the TRILL of the MAC address on the RB4 cannot be transmitted after the local message is subjected to unicast encapsulation, will not arise. In addition, discarding the local message due to the above problem finally may cause a waste of forwarding resources. According to this embodiment, the local message with an unknown unicast reachability is encapsulated into a TRILL broadcast within the VLAN1. Then, the local message attempts to reach an MAC address of the RB4. Although the broadcast message cannot reach the MAC address, an opportunity to reattempt and study is provided. Therefore, other unicast forwarding ways may be studied once there are other reachable paths.

According to the fast convergence method of the ESADI protocol provided by the embodiment, the LSP is generated through the TRILL protocol, when an ESADI neighbouring relationship with respect to the local RB is changed. The RB performs the unicast encapsulation computation after the RB receives the LSP, to obtain a remote RB relationship list of the local RB. The local RB transmits the remote RB relationship list of the local RB to a next-level ESADI neighbouring RB, and updates remote RB relationship list of the local RB based on a remote RB relationship list of the next-level ESADI neighbouring RB. Therefore, the problem caused by the method in which the current ESADI protocol detects a change in the network topology through a keep-alive time period of the DRB, can be avoided. The delay of 1200 seconds due to the aging time period of the TRILL-LSP is omitted, so as to achieve the fast convergence of the ESADI protocol.

Based on the fast convergence method of the ESADI protocol provided by the above embodiments, this embodiment provides a switch applied in the TRILL network. The switch includes a memory and a processor connected to the memory.

The memory is adapted to store instructions, which, when executed by the processor, cause the processor to perform the following steps: when the network topology is changed, the unicast encapsulation table is computed through the TRILL protocol; when the unicast encapsulation table includes a remote RB as an appointed VLAN forwarder which is reachable, and the local RB has received an LSP, from the remote RB, for enabling the ESADI function information, a neighbouring relationship between the local RB and the remote RB is established in the local VLAN, to achieve fast convergence of the ESADI protocol.

The unicast encapsulation table computing unit and the ESADI protocol convergence unit included in the convergence apparatus of the ESADI protocol provided by the embodiment of the disclosure, and the first sensing module, the second sensing module, the neighbour module, and the routing convergence module included in the ESADI protocol convergence unit, may be implemented in the processor of the switch, or may be implemented in a specific logic circuit. In practice, the processor may be a Central Processing Unit (CPU), a microprocessor (MPU), a digital signal processor (DSP), a field programmable gate array (FPGA) or the like.

According to the embodiment of the disclosure, the convergence method of the ESADI protocol, when implemented in a form of a software function module and sold or used as a standalone product, may be stored in a readable storage medium. In view of this, essence or the contribution to the related art of the technical solutions of the embodiments of the disclosure may be embodied in a software product. The software product is stored in a storage medium and includes several instructions which cause a computer device (may be a personal computer, a server, a network device or the like) to perform some or all of the method according to an embodiment of the disclosure. The storage medium may include an USB driver, a removable hard disk, a Read-Only Memory (ROM), a magnetic disk or an optical disk or other mediums which can store program codes. Therefore, the embodiment of the disclosure is not limited to any specific combination of software and hardware.

Correspondingly, the embodiment of the disclosure may further provide a readable storage medium storing executable instructions for performing any one of the convergence methods of the ESADI protocol according to the embodiments of the disclosure.

It should be understood that, in the embodiments of the disclosure, the disclosed method and apparatus may be implemented in other ways. The apparatus described above is merely exemplary. For example, the division of the units is merely a logic division, and in practice, may have other divisions. For example, multiple units or assemblies may be combined or integrated into another system, and some features may be omitted or not implemented. In additional, coupling, direct coupling or communication connection between the shown or discussed components may be implemented via some interfaces, apparatus or units, and may be electrical, mechanical or other forms.

The units explained as separate components may be physically separated from each other or not. A component shown as a unit may be a physical unit or not, that is, may be located at one place or may be distributed over multiple network units. Some or all of the units may be selected as required to achieve the object of the technical solution of the embodiment.

In additional, the functional units of the embodiments of the disclosure may be integrated in a single processing unit, or may be each implemented as a single unit. Two or more of the functional units may be integrated in a single processing unit. The integrated unit may be implemented in hardware or may be implemented in hardware and software.

The skilled in the art should understand that, some or all of steps for implementing the embodiment of the method may be performed via hardware related to a program which may be stored in a computer-readable storage medium. The program, when executed, performs the steps of the embodiment of the method. The storage medium may include a removable storage device, a Read-Only Memory (ROM), a magnetic disk or an optical disk or other mediums which can store program codes.

Besides those already mentioned above, many modifications and variations of the above embodiments may be made without departing from the scope of the invention as defined by the appended claims.

### INDUSTRIAL APPLICABILITY

According to the embodiment of the disclosure, when network topology is changed, the unicast encapsulation table is computed through the TRILL protocol. When the unicast encapsulation table includes the remote RB as an appointed remote VLAN forwarder which is reachable, and the local RB has received an LSP for enabling ESADI function information from the remote RB, a neighbouring relationship between the local RB and the remote RB is established in the local VLAN, to achieve fast convergence of the ESADI protocol. Therefore, correct synchronization of an LSP in the newly split network can be guaranteed.

## Claims

1. A convergence method of an End Station Address Distribution Information, ESADI, protocol, the method comprises:
computing a unicast encapsulation table through a Transparent Interconnection over Lots of Links, TRILL, protocol, when network topology is changed (S101), wherein the unicast encapsulation table is used to determine the reachability of all Routing Bridges, RBs, as appointed remote Virtual Local Area Network, VLAN, forwarders;
establishing, in a local VLAN a neighbouring relationship between a local Routing Bridge, RB, and a remote RB to achieve fast convergence of the ESADI protocol, when the unicast encapsulation table includes the remote RB as an appointed remote VLAN forwarder which is reachable, and the local RB has received a Link-State Packet, LSP, for enabling ESADI function information from the remote RB (S102),
wherein the unicast encapsulation table including the remote RB as an appointed remote VLAN forwarder which is reachable comprises:
when an encapsulation table term of the remote VLAN of the remote RB exists in the local RB, the remote RB as the appointed remote VLAN forwarder is reachable,
wherein the establishing, in a local VLAN, a neighbouring relationship between a local RB and a remote RB, comprises:
when the local RB has received the LSP from the remote RB, and the unicast encapsulation table comprises the encapsulation table term of the remote VLAN of the remote RB, adding the remote RB to be an ESADI neighbouring RB and issuing a Media Access Control, MAC, table term indicating the remote RB is reachable, by the local VLAN; otherwise, not adding the remote RB to be an ESADI neighbouring RB or issuing a MAC table term indicating the remote RB is reachable, by the local VLAN.

2. The method according to claim 1, wherein reception of the LSP for enabling ESADI function information from the remote RB by the local RB comprises:
receiving, by the local RB, the LSP from the remote RB, wherein the LSP carries a sub Type-length-value, TLV, of Interested VLANs and Spanning Tree Roots, and fields of 'nickname' and 'VLAN' in the sub TLV of the Interested VLANs and Spanning Tree Roots indicate that the remote VLAN of the remote RB enables the ESADI function information.

3. The method according to claim 2, wherein the establishing, in a local VLAN, a neighbouring relationship between a local RB and a remote RB, comprises:
when the fields of 'nickname' and 'VLAN' in the sub TLV of the Interested VLANs and Spanning Tree Roots carried by the LSP indicate that the remote VLAN enabled ESADI function information exists,
performing no processing, in case that the remote RB as the appointed remote VLAN forwarder is still reachable; and
deleting the remote RB as the ESADI neighbouring RB from the local VLAN, and deleting the reachable MAC table term corresponding to the remote RB, in case that the remote RB as the appointed remote VLAN forwarder is not reachable.

4. The method according to claim 2, wherein the establishing, in a local VLAN, a neighbouring relationship between a local RB and a remote RB, comprises:
deleting, by the local RB, the remote RB as the ESADI neighbouring RB, when the local RB founds that the remote VLAN enabled ESADI function information indicated in the fields of 'nickname' and 'VLAN' in the sub TLV of the Interested VLANs and Spanning Tree Roots of the LSP of the TRILL protocol is withdrawn, aged or deleted.

5. A convergence apparatus of an End Station Address Distribution Information, ESADI, protocol, the apparatus comprises:
a unicast encapsulation table computing unit (201), arranged to compute a unicast encapsulation table through a Transparent Interconnection over Lots of Links, TRILL, protocol, when network topology is changed; wherein the unicast encapsulation table is used to determine the reachability of all Routing Bridges, RBs, as appointed remote Virtual Local Area Network, VLAN, forwarders,and
an ESADI protocol convergence unit (202), arranged to establish, in a local VLAN a neighbouring relationship between a local Routing Bridge, RB, and a remote RB to achieve fast convergence of the ESADI protocol, when the unicast encapsulation table includes the remote RB as an appointed remote VLAN forwarder which is reachable, and the local RB has received a Link-State Packet, LSP, for enabling ESADI function information from the remote RB,
wherein the ESADI protocol convergence unit (202) if further arranged to:
sense that the remote RB as the appointed remote VLAN forwarder is reachable, when an encapsulation table term of the remote VLAN of the remote RB exists in the local RB; and
when the local RB has received the LSP from the remote RB, and the unicast encapsulation table comprises the encapsulation table term of the remote VLAN of the remote RB, add the remote RB to be an ESADI neighbouring RB and issue a Media Access Control, MAC, table term indicating the remote RB is reachable, by the local VLAN; otherwise, not add the remote RB to be an ESADI neighbouring RB or issue a MAC table term indicating the remote RB is reachable, by the local VLAN.

6. The apparatus according to claim 5, wherein the ESADI protocol convergence unit (202) comprises:
a first sensing module (301), arranged to acquire and sense reachability of the remote RB as the appointed remote VLAN forwarder in the TRILL protocol;
a second sensing module (302), arranged to acquire and sense whether the remote RB enables the ESADI function information in the VLAN, wherein the ESADI function information is obtained from the VLAN indicated in the fields of 'nickname' and 'VLAN' in the sub TLV of the Interested VLANs and Spanning Tree Roots carried in the LSP from the remote RB;
a neighbour module (303), arranged to obtain a condition for establishing an ESADI neighbouring relationship from the first sensing module (301) and the second sensing module (302), and compute and determine the neighbouring relationship; and
a routing convergence module (304), arranged to add or delete the MAC table term indicating the remote RB is reachable corresponding to the neighbouring relationship through establishing or deleting the neighbouring relationship in the neighbour module (303), so as to achieve fast convergence of the ESADI protocol.

7. The apparatus according to claim 6, wherein the second sensing module (302) comprises:
a second sensing device, arranged to sense that the local RB receives the LSP from the remote RB, wherein the LSP carries the sub Type-length-value, TLV, of Interested VLANs and Spanning Tree Roots, and fields of 'nickname' and 'VLAN' in the sub TLV of the Interested VLANs and Spanning Tree Roots indicate that the remote VLAN of the remote RB enables the ESADI function information.

8. The apparatus according to claim 7, wherein the routing convergence module (304) comprises:
a first routing convergence device, arranged to: when the fields of 'nickname' and 'VLAN' in the sub TLV of the Interested VLANs and Spanning Tree Roots carried by the LSP in the TRILL protocol indicate that the remote VLAN enabled ESADI function information exists,
perform no processing, in case that the remote RB as the appointed remote VLAN forwarder is still reachable; and
delete the remote RB as the ESADI neighbouring RB from the local VLAN, and delete the reachable MAC table term corresponding to the remote RB, in case that the remote RB as the appointed remote VLAN forwarder is not reachable,
a second routing convergence device, arranged to delete, by the local RB, the remote RB as the ESADI neighbouring RB, when the local RB founds that the remote VLAN enabled ESADI function information indicated in the fields of 'nickname' and 'VLAN' in the sub TLV of the Interested VLANs and Spanning Tree Roots of the LSP of the TRILL protocol is withdrawn, aged or deleted.

9. A computer program comprising instructions which, when the program is executed by a computer, cause the computer to carry out all the steps of the method according to any of claims 1 to 4.

## Patentansprüche

1. Konvergenz-Verfahren eines Endstations-Adressenverteilungs-Informations ESADI -Protokolls, umfassend die folgenden Schritte: Berechnen einer Unicast -Verkapselungstabelle durch ein Transparent Interconnection over Lots of Links, TRILL, Protokoll, wenn die Netzwerk-Topologie geändert wird (S101), wobei die Unicast -Verkapselungstabelle dazu benutzt wird, die Erreichbarkeit aller Routing Bridges, RBs, zu bestimmen, und zwar als ernannte entfernte Virtual Local Area Network, VLAN, -Transporteure; Errichten in einem lokalen VLAN eine Nachbarschafts-Beziehung zwischen einer lokalen Routing Bridge, RB, und einer entfernten RB, um eine schnelle Konvergenz des ESADI -Protokolls zu erreichen, wenn die Unicast Encapsulation Tabelle die entfernte RB als ernannten entfernten VLAN Transporteur aufweist, der erreichbar ist, und die lokale RB ein Link-State Packet, LSP, empfangen hat, um von der entfernten RB (S102) die ESADI -Funktionsinformation zu ermöglichen, wobei die Unicast Encapsulation Tabelle, die die entfernte RB als angegebenen entfernten VLAN Transporteur, der erreichbar ist, folgendes aufweist: wenn ein Encapsulation Tabellenbegriff der entfernten VLAN der entfernten RB in der lokalen RB existiert, ist die entfernte RB als der ernannte entfernte VLAN Transporteur erreichbar, wobei die Errichtung eines Nachbarschaftsverhältnisses zwischen einer lokalen RB und einer entfernten RB in einem lokalen VLAN folgendes umfaßt: sobald die lokale RB die LSP von der entfernten RB erhalten hat, und die Unicast Verkapselungstabelle den Verkapselungstabellenausdruck von der entfernten VLAN der entfernten RB aufweist, Hinzufügen der entfernten RB zu einer ESADI, die der RB benachbart ist und Ausgabe eines Media Access Control, MAC, -Tabellenbegriffs, der anzeigt, daß die entfernte RB durch die lokale VLAN erreichbar ist; andererseits kein Hinzufügen der entfernten RB zur Bildung einer ESADI, die der RB benachbart ist oder Ausgabe eines MAC Tabellenausdrucks durch die lokale VLAN, der anzeigt, daß die entfernte RB erreichbar ist.

2. Verfahren nach Anspruch 1, **dadurch gekennzeichnet, daß** der Empfang der LSP zur Aktivierung der ESADI -Funktionsinformation von der entfernten RB durch die lokale RB folgendes aufweist: Empfangen der LSP von der entfernten RB, durch die lokale RB, wobei die LSP einen Untertyp-Längenwert, TLV von interessierten VLANs trägt sowie Spanning Tree Roots und Felder von "Nicknamen" sowie "VLAN" in dem Unter -TLV der interessierten VLANs und Spanning Tree Roots, die die entfernte VLAN der entfernten RB anzeigt, was die ESADI -Funktionsinformation ermöglicht.

3. Verfahren nach Anspruch 2, **dadurch gekennzeichnet, daß** das Errichten in einem lokalen VLAN eine Nachbarschaftsbeziehung zwischen einer lokalen RB und einer entfernten RB folgendes umfaßt: wenn die Felder von "Nicknamen" und "VLAN" in der Unter -TLV der interessierten VLANs und der Spanning Tree Roots, die von der LSP getragen werden, anzeigen, daß das entfernte VLAN die ESADI Funktionsinformation existiert, keine Prozeßdurchführung für den Fall, daß die entfernte RB als der genannte entfernte VLAN -Transporteur noch erreichbar ist; und Löschen der entfernten RB als der ESADI von der lokalen VLAN benachbarten RB, sowie Löschen des erreichbaren MAC Tabellenbegriffs, der der entfernten RB entspricht, und zwar für den Fall, daß die entfernte RB als der ernannte entfernte VLAN Transporteur nicht erreichbar ist.

4. Verfahren nach Anspruch 2, **dadurch gekennzeichnet, daß** das Errichten eines Nachbarschaftsverhältnisses zwischen einer lokalen RB und einer entfernten RB in einem lokalen VLAN folgendes umfaßt: Löschen der entfernten RB als die der ESADI benachbarten RB in der lokalen RB, wenn die lokale RB feststellt, daß das entfernte VLAN die ESADI Funktionsinformation aktiviert hat, angezeigt in den Feldern von "Nicknamen" und "VLAN" der Unter -TLV der interessierten VLANs und Spanning Tree Roots des LSP des TRILL Protokolls, zurückgezogen, veraltet oder gelöscht sind.

5. Konvergenz-Vorrichtung eines Endstations-Adressenverteilungs-Information, ESADI, Protokolls, umfassend eine Unicast Verkapselungs - Tabellen -Berechnungseinheit (201), angeordnet zur Berechnung einer Unicast Verkapselungstabelle durch ein Transparent Interconnection over Lots of Links, TRILL, Protokoll, wenn die Netzwerk-Topologie geändert wird, wobei die Unicast -Verkapselungstabelle dazu benutzt wird, die Erreichbarkeit aller Routing Bridges, RBs, zu bestimmen, und zwar als ernannte entfernte Virtual Local Area Network, VLAN-Transporteure, des weiteren umfassend eine ESADI Protokollkonvergenzeinheit (202), die angeordnet ist, um in einem VLAN eine Nachbarschaftsbeziehung zwischen einer lokalen Routing Bridge, RB, und einer entfernten RB zu errichten, um eine schnelle Konvergenz des ESADI -Protokolls zu erreichen, wenn die Unicast Encapsulation Tabelle die entfernte RB als ernannten entfernten VLAN Transporteur aufweist, der erreichbar ist, und die lokale RB ein Link-State Packet, LSP, empfangen hat, um von der entfernten RB die ESADI -Funktionsinformation zu ermöglichen, wobei die ESADI Protokollkonvergenzeinheit (202) ferner angeordnet ist, um zu ermitteln, daß die entfernte RB als ein entfernter VLAN Transporteur erreichbar ist, wenn ein Verkapselungs-Tabellenbegriff des entfernten VLAN des entfernten RB in dem lokalen RB existiert, und wenn die lokale RB die LSP von der entfernten RB erhalten hat, und die Unicast Verkapselungstabelle den Verkapselungstabellenausdruck von der entfernten VLAN der entfernten RB aufweist, Hinzufügen der entfernten RB zu einer ESADI, die der RB benachbart ist und Ausgabe eines Media Access Control, MAC, -Tabellenbegriffs, der anzeigt, daß die entfernte RB durch die lokale VLAN erreichbar ist; andererseits kein Hinzufügen der entfernten RB zur Bildung einer ESADI, die der RB benachbart ist oder Ausgabe eines MAC Tabellenausdrucks durch die lokale VLAN, der anzeigt, daß die entfernte RB erreichbar ist.

6. Vorrichtung nach Anspruch 5, **dadurch gekennzeichnet, daß** die ESADI - Protokoll-Konvergenzeinheit (202) folgendes aufweist:
einen ersten Fühlermodul (301), der so angeordnet ist, daß er die Erreichbarkeit des entfernten RB als den genannten entfernten VLAN -Transporteur in dem TRILL Protokoll erfaßt und fühlt;
einen zweiten Fühlermodul (302), der dazu dient, zu erfassen und zu fühlen, ob der entfernte RB die ESADI Funktionsinformation in dem VLAN erfaßt und fühlt, wobei die ESADI Funktionsinformation, die von dem VLAN erhalten wird, in den Feldern "Spitzname" und "VLAN" in dem Unter -TLV des interessierten VLANs und der Spanning Tree Roots angezeigt wird, die von dem entfernten RB in den LSP getragen werden;
ferner umfassend ein Nachbarmodul (303), der dazu dient, eine Bedingung zur Errichtung einer ESADI Nachbarschaftsbeziehung von dem ersten Fühlermodul (301) und dem zweiten Fühlermodul (302) zu erhalten und die Nachbarschaftsbeziehung zu berechnen und zu bestimmen; und
umfassend einen Routing Konvergenz Modul (304), der zum Hinzufügen oder Löschen des MAC -Tabellenausdrucks dient, welcher angibt, daß der entfernte RB erreichbar ist, und zwar entsprechend der Nachbarschaftsbeziehung durch Errichten oder Löschen der Nachbarschaftsbeziehung in dem Nachbarmodul (303), um dadurch eine schnelle Konvergenz des ESADI Protokolls zu erreichen.

7. Vorrichtung nach Anspruch 6, **dadurch gekennzeichnet, daß** der zweite Fühlermodul (302) folgendes aufweist:
eine zweite Fühlervorrichtung, die so angeordnet ist, daß sie fühlt, daß das lokale RB von dem entfernten RB die LSP empfängt, wobei die LSP den Subtyp-Längenwert, TLV, des interessierten VLANs und die Spanning Tree Roots trägt, und die Felder "Nickname" und "VLAN" in der Unter -TLV der interessierten VLANs sowie die Spanning Tree Roots anzeigen, daß der entfernte VLAN des entfernten RB die ESADI Funktionsinformation aktiviert.

8. Vorrichtung nach Anspruch 7, **dadurch gekennzeichnet, daß** der Routing Konvergenzmodul (304) folgendes umfaßt:
eine erste Routing Konvergenz-Einrichtung, die dazu dient, daß dann, wenn die Felder "Nickname" und "VLAN" in der Unter -TLV der interessierten VLANs und die Spanning Tree Roots, die von der LSP in dem TRILL Protokoll getragen werden, anzeigen, daß die entfernte VLAN, aktiviert durch die ESADI Funktionsinformation, vorhanden ist,
und keinen Prozeß durchführt, und zwar für den Fall, daß die entfernte RB als der gewählte entfernte VLAN Transporteur noch erreichbar ist, und
die entfernte RB als die ESADI, die von der lokalen VLAN benachbarte RB gelöscht wird und der erreichbare MAC Tabellenwert, der der entfernten RB entspricht, gelöscht wird, und zwar für den Fall, daß die entfernte RB als der gewählte entfernte VLAN Transporteur nicht erreichbar ist,
und wobei eine zweite Routing Konvergenz-Einrichtung, die dazu dient, mit Hilfe der lokalen RB die entfernte RB als die der ESADI benachbarte RB zu löschen, wenn die lokale RB findet, daß die entfernte VLAN die durch die ESADI Funktionsinformation aktiviert ist, daß in den Feldern von "Nickname" und "VLAN" in der Unter-TLV der interessierten VLANs und der Spanning Tree Roots des LSP des TRILL Protokolls zurückgezogen, veraltet oder gelöscht ist.

9. Computerprogramm, umfassend die Instruktionen, welche dann, wenn das Programm durch einen Computer ausgeführt wird, den Computer veranlassen, alle Schritte des Verfahrens gemäß einem der Ansprüche 1 bis 4 auszuführen.

## Revendications

1. Procédé de convergence d'un protocole d'informations de distribution d'adresse de station d'extrémité, ESADI, le procédé comprenant :
le calcul d'une table d'encapsulation de monodiffusion à travers un protocole d'interconnexion transparente d'un grand nombre de liaisons, TRILL, lorsque la topologie de réseau est changée (S101), dans lequel la table d'encapsulation de monodiffusion est utilisée pour déterminer l'accessibilité de tous les ponts de routage, RB, en tant que propagateurs de réseau local virtuel, VLAN, distants attitrés ;
l'établissement, dans un VLAN local, d'une relation de voisinage entre un pont de routage local, RB, et un RB distant pour parvenir à une convergence rapide du protocole ESADI, dans lequel la table d'encapsulation de monodiffusion inclut le RB distant en tant que propagateur de VLAN distant attitré qui est accessible, et le RB local a reçu un paquet d'état de liaison, LSP, pour valider des informations de fonction ESADI à partir du RB distant(S102),
dans lequel la table d'encapsulation de monodiffusion incluant le RB distant en tant que propagateur de VLAN distant attitré qui est accessible comprend :
lorsqu'un terme de table d'encapsulation du VLAN distant du RB distant existe dans le RB local, le RB distant en tant que propagateur de VLAN distant attitré est accessible,
dans lequel l'établissement, dans un VLAN local, d'une relation de voisinage entre un RB local et un RB distant, comprend :
lorsque le RB local a reçu le LSP du RB distant, et que la table d'encapsulation de monodiffusion comprend le terme de table d'encapsulation du VLAN distant du RB distant, l'ajout du RB distant pour qu'il soit un RB voisin d'ESADI et l'émission d'un terme de table de commande d'accès au support, MAC, indiquant que le RB distant est accessible, par le VLAN local ; sinon, le non-ajout du RB distant pour qu'il soit un RB voisin d'ESADI ou l'émission d'un terme de table MAC indiquant que le RB distant est accessible, par le VLAN local.

2. Procédé selon la revendication 1, dans lequel la réception du LSP pour validation d'informations de fonction ESADI à partir du RB distant par le RB local comprend :
la réception, par le RB local, du LSP à partir du RB distant, dans lequel le LSP porte une sous-valeur de longueur de type, TLV, de VLAN intéressés et des racines d'arbre recouvrant (Spanning Tree), et des champs de « surnom » et « VLAN » dans le sous-TLV des VLAN intéressés et des racines d'arbre recouvrant indiquent que le VLAN distant du RB distant valide les informations de fonction ESADI.

3. Procédé selon la revendication 2, dans lequel l'établissement, dans un VLAN local, d'une relation de voisinage entre un RB local et un RB distant, comprend :
lorsque les champs de « surnom » et « VLAN » dans le sous-TLV des VLAN intéressés et des racines d'arbre recouvrant portés par le LSP indiquent que les informations de fonction ESADI validées par VLAN distant existent,
la réalisation d'aucun traitement, dans le cas où le RB distant en tant que propagateur de VLAN distant attitré est encore accessible ; et
la suppression du RB distant en tant que le RB voisin d'ESADI du VLAN local, et la suppression du terme de table MAC accessible correspondant au RB distant, dans le cas où le RB distant en tant que propagateur de VLAN distant attitré n'est pas accessible.

4. Procédé selon la revendication 2, dans lequel l'établissement, dans un VLAN local, d'une relation de voisinage entre un RB local et un RB distant, comprend :
la suppression, par le RB local, du RB distant en tant que RB voisin d'ESADI, lorsque le RB local trouve que les informations de fonction ESADI validées par VLAN distant indiqué dans les champs de « surnom » et « VLAN » dans le sous-TLV des VLAN intéressés et les racines d'arbre recouvrant du LSP du protocole TRILL sont retirées, vieillies ou annulées.

5. Appareil de convergence d'un protocole d'informations de distribution d'adresse de station d'extrémité, ESADI, l'appareil comprend :
une unité de calcul de table d'encapsulation de monodiffusion (201), agencée pour calculer une table d'encapsulation de monodiffusion à travers un protocole d'interconnexion transparente d'un grand nombre de liaisons, TRILL, lorsqu'une topologie de réseau est changée ; dans lequel la table d'encapsulation de monodiffusion est utilisée pour déterminer l'accessibilité de tous les ponts de routage, RB, en tant que propagateurs de réseau local virtuel, VLAN, distants attitrés, et
une unité de convergence de protocole ESADI (202), agencée pour établir, dans un VLAN local, une relation de voisinage entre un pont de routage local, RB, et un RB distant pour parvenir à une convergence rapide du protocole ESADI, lorsque la table d'encapsulation de monodiffusion inclut le RB distant en tant que propagateur de VLAN distant attitré qui est accessible, et que le RB local a reçu un paquet d'état de liaison, LSP, pour valider des informations de fonction d'ESADI provenant du RB distant,
dans lequel l'unité de convergence de protocole ESADI (202) est en outre agencée pour :
détecter que le RB distant en tant que propagateur de VLAN distant attitré est accessible, lorsqu'un terme de table d'encapsulation du VLAN distant du RB distant existe dans le RB local ; et
lorsque le RB local a reçu le LSP du RB distant, et que la table d'encapsulation de monodiffusion comprend le terme de table d'encapsulation du VLAN distant du RB distant, ajouter le RB distant pour qu'il soit un RB voisin d'ESADI et émettre un terme de table de commande d'accès au support, MAC, indiquant que le RB distant est accessible, par le VLAN local ; sinon, ne pas ajouter le RB distant pour qu'il soit un RB voisin d'ESADI ou émettre un terme de table MAC indiquant que le RB distant est accessible, par le VLAN local.

6. Appareil selon la revendication 5, dans lequel l'unité de convergence de protocole ESADI (202) comprend :
un premier module de détection (301), agencé pour acquérir et détecter une accessibilité du RB distant en tant que propagateur de VLAN distant attitré dans le protocole TRILL ;
un second module de détection (302), agencé pour acquérir et détecter si le RB distant valide les informations de fonction ESADI dans le VLAN, dans lequel les informations de fonction ESADI sont obtenues auprès du VLAN indiqué dans les champs de « surnom » et « VLAN » dans le sous-TLV des VLAN intéressés et des racines d'arbre recouvrant (Spanning Tree) portés dans le LSP à partir du RB distant ;
un module de voisinage (303), agencé pour obtenir une condition pour établir une relation de voisinage d'ESADI à partir du premier module de détection (301) et du second module de détection (302), et calculer et déterminer la relation de voisinage ; et
un module de convergence de routage (304), agencé pour ajouter ou supprimer le terme de table MAC indiquant que le RB distant est accessible correspondant à la relation de voisinage par l'établissement ou la suppression de la relation de voisinage dans le module de voisinage (303), de manière à parvenir à une convergence rapide du protocole ESADI.

7. Appareil selon la revendication 6, dans lequel le second module de détection (302) comprend :
un second dispositif de détection, agencé pour détecter que le RB local reçoit le LSP du RB distant, dans lequel le LSP porte la sous-valeur de longueur de type, TLV, de VLAN intéressés et des racines d'arbre recouvrant, et des champs de « surnom » et « VLAN » dans le sous-TLV des VLAN intéressés et des racines d'arbre recouvrant indiquent que le VLAN distant du RB distant valide les informations de fonction ESADI.

8. Appareil selon la revendication 7, dans lequel le module de convergence de routage (304) comprend :
un premier dispositif de convergence de routage, agencé pour : lorsque les champs de « surnom » et « VLAN » dans le sous-TLV des VLAN intéressés et des racines d'arbre recouvrant portés par le LSP dans le protocole TRILL indiquent que les informations de fonction ESADI validées par le VLAN distant existent,
ne réaliser aucun traitement, dans le cas où le RB distant en tant que propagateur de VLAN distant attitré est encore accessible ; et
supprimer le RB distant en tant que RB voisin d'ESADI du VLAN local, et supprimer le terme de table MAC accessible correspondant au RB distant, dans le cas où le RB distant en tant que propagateur de VLAN distant attitré n'est pas accessible,
un second dispositif de convergence de routage, agencé pour supprimer, par le RB local, le RB distant en tant que RB voisin d'ESADI, lorsque le RB local trouve que les informations de fonction ESADI validées par VLAN distant indiqué dans les champs de « surnom » et « VLAN » dans le sous-TLV des VLAN intéressés et des racines d'arbre recouvrant du LSP du protocole TRILL sont retirées, vieillies ou annulées.

9. Programme d'ordinateur comprenant des instructions qui, lorsque le programme est exécuté par un ordinateur, amènent l'ordinateur à effectuer toutes les étapes du procédé selon l'une quelconque des revendications 1 à 4.
